# DEMANDE DE BREVET EUROPEEN

(11) **EP 2 492 834 A1**
(43) Date de publication de la demande: **29.08.2012**
(21) Numéro de dépôt: 11305211.2
(22) Date de dépôt: 28.02.2011
(51) Int. Cl.: G06F 21/00

(54) **Procédé d'authentification d'un utilisateur**

(71) Demandeur: Gemalto SA, 92190 Meudon (FR)
(72) Inventeur: Larduinat , Xavier, 92197 Meudon (FR)
(74) Mandataire: Lotaut, Yacine Diaw

(57) **Abrégé**

La présente invention a pour objet un procédé d'authentification forte d'un utilisateur souhaitant accéder à des services fournis par un serveur. La solution d'authentification de l'invention est basée sur un nouveau facteur d'authentification affranchi de tout authentifieur et compatible avec tous les terminaux d'authentification existants ou à venir. Ce nouveau facteur d'authentification est un ensemble d'informations uniques et spécifiques à l'utilisateur permettant de l'identifier de façon certaine sur le réseau. Le processus d'identification et authentification de l'utilisateur accédant à un serveur d'applications est effectué à l'aide d'un serveur d'authentification dédié comprenant le nouveau facteur d'authentification. Le procédé de l'invention a donc permis de mettre au point une méthode d'authentification de l'utilisateur désirant accéder aux services d'un fournisseur de services sur la base d'une correspondance bijective entre le comportement quotidien de l'utilisateur et son authentification.

## Description

### Domaine de l'invention

La présente invention a pour objet un procédé d'authentification d'un utilisateur. La présente invention se rapporte au domaine du contrôle d'accès à des données numériques. La présente invention se rapporte plus particulièrement à un procédé permettant de réaliser une authentification forte d'un utilisateur souhaitant accéder à des services fournis par un serveur.

### Etat de la technique

L'authentification de l'entité requérant un accès à des données informatiques est un moyen privilégié pour garantir la sécurisation des données informatiques sensibles. Dans le domaine de la sécurisation de l'accès à des données, l'art antérieur connaît déjà l'authentification simple (typiquement avec identifiant et simple mot de passe). Ce type d'authentification est utilisé couramment mais n'offre pas un niveau de sécurité suffisant pour assurer la protection des données informatiques sensibles. Sa principale faiblesse réside dans la facilité avec laquelle l'identité et le mot de passe de l'entité peut être usurpés grâce à différentes techniques d'attaque facile à mettre en oeuvre. Ces techniques d'attaque peuvent être entre autres une attaque par dictionnaire, une attaque par écoute du clavier informatique (Keylogger en anglais), une attaque par écoute du réseau (password sniffer en anglais), le Hameçonnage (ou phishing en anglais) ...

Une solution connue pour résoudre ce problème est de remplacer l'authentification simple par une authentification à plusieurs facteurs. Les facteurs d'authentification appartiennent à l'une des trois classes suivantes
- ce que l'utilisateur sait (mot de passe, code PIN, phrase secrète...),
- ce que l'utilisateur possède (objet physique du type carte magnétique, RFID, clé USB, carte à puce, téléphone portable etc... cet objet physique est communément nommé authentifieur ou Token en anglais,
- ce que l'utilisateur est (attribut physique unique à chaque utilisateur du type empreinte digitale, rétine, visage, voix ou signature manuscrite...).

La combinaison d'au moins deux facteurs d'authentification permet d'assurer une réelle solidité pour une authentification forte permettant par exemple d'obtenir un niveau de sécurité suffisant pour contrôler l'accès à des données informatiques sensibles.

Cependant, une telle authentification forte fait peser différentes contraintes tant sur l'utilisateur que sur le fournisseur de services. En effet, l'utilisateur doit être en permanence porteur de son authentifieur et ou d'un terminal de lecture de d'attribut physique. L'utilisateur devra également être porteur d'un terminal d'authentification compatible avec la méthode d'authentification requise pour accéder au service. Il n'est donc pas systématiquement possible pour cet utilisateur de s'authentifier de manière appropriée auprès d'un serveur contrôlant l'accès à des données, notamment lorsque cet utilisateur a une activité nomade et qu'il se déplace fréquemment sans pouvoir emporter avec lui ou en ayant oublié tout ou une partie du matériel nécessaire.

En outre, un autre inconvénient constaté avec la procédure d'authentification forte est l'incompatibilité de certains authentifieurs avec certains terminaux d'authentification. Par exemple, si nous prenons le cas de la clé USB qui est un authentifieur très répandu, on peut constater que tous les terminaux d'authentification notamment certains téléphones mobiles ne comportent pas d'interface de réception d'une telle clé. L'utilisateur ne pourra ainsi pas utiliser son téléphone mobile pour accéder aux services proposés par le serveur, ce qui parfois est rédhibitoire.

Les contraintes du côté du fournisseur de services sont essentiellement en relation avec les coûts de distribution des authentifieurs et éventuellement des terminaux de lecture de d'attribut physique à l'ensemble de ses utilisateurs. Les coûts d'un tel déploiement sont dans certains cas si rédhibitoire que l'authentification simple de l'utilisateur est préférée par les fournisseurs de services et demeure encore aujourd'hui le moyen d'authentification le plus répandu.

Un besoin s'est fait sentir de disposer d'une technique de sécurisation de l'accès à des données informatiques sensibles qui présente un niveau de sécurité quasi-équivalent à celui procuré par une authentification forte, sans toutefois être aussi contraignant qu'une authentification forte actuelle.

### Exposé de l'invention

L'invention a justement pour but de répondre à ce besoin en proposant une alternative aux actuels procédés d'authentification forte. Pour cela, l'invention propose un procédé d'identification et d'authentification d'un utilisateur pour accéder à un serveur d'applications. La solution d'authentification de l'invention est basée sur un nouveau facteur d'authentification affranchi de tout authentifieur ou de terminal de lecture d'un attribut physique et compatible avec tous les terminaux d'authentification existants ou à venir. Ce nouveau facteur d'authentification est un ensemble d'informations uniques et spécifiques permettant d'identifier de façon certaine l'utilisateur sur le réseau de télécommunication.

Le processus d'identification et authentification de l'utilisateur accédant à un serveur d'applications est effectué à l'aide d'un serveur d'authentification dédié comprenant le nouveau facteur d'authentification.

Le principe de fonctionnement de l'invention est le suivant. Lorsqu'une requête de connexion à un serveur d'applications d'un réseau est émise par un terminal, l'utilisateur est identifié et authentifié par le serveur d'authentification, via un identifiant et un mot de passe ainsi que le facteur d'authentification unique de l'utilisateur stockés dans une mémoire dudit serveur d'authentification.

Avec l'invention, le fournisseur de services peut s'assurer de l'identité de l'usager par les données du facteur d'authentification, quel que soit le terminal et le réseau utilisés pour accéder au serveur d'applications.

Le procédé de l'invention a donc permis de mettre au point une méthode d'authentification d'un utilisateur souhaitant accéder aux services d'un fournisseur de services sur la base d'une correspondance bijective entre le comportement quotidien de l'utilisateur et son authentification.

Plus précisément, l'invention a pour objet un procédé d'authentification d'un utilisateur dans lequel
- un terminal dudit utilisateur se connecte à un serveur d'applications d'un réseau de télécommunication à l'issue d'une procédure d'authentification dudit terminal,
caractérisé en ce qu'il comporte les étapes suivantes :
- association, dans une mémoire de données d'un serveur d'authentification, d'un profil de l'utilisateur à des données d'identification dudit utilisateur qui sont un identifiant, un mot de passe et au moins un facteur de sécurité spécifique à un comportement dudit utilisateur,
- la procédure d'authentification est établie entre le serveur d'authentification et le terminal, lorsque ledit terminal émet une requête de connexion à destination d'un serveur d'applications, la procédure d'authentification étant un échange de vérification des données d'identification dudit profil,
- la connexion entre le terminal et le serveur d'applications est autorisée lorsque l'issue de la procédure d'authentification entre le terminal et le serveur d'authentification est positive.

### Brève description des dessins

L'invention sera mieux comprise à la lecture de la description qui suit et à l'examen des figures qui l'accompagnent. Celles-ci ne sont présentées qu'à titre indicatif et nullement limitatif de l'invention.
La figure 1 montre une représentation schématique des entités qui interviennent dans un procédé d'authentification forte d'un utilisateur, par l'intermédiaire d'un réseau, pour accéder à une application selon un mode de réalisation de l'invention.
Les figures 2 et 3 montrent une illustration d'étapes du fonctionnement du procédé d'identification/d'authentification selon un mode de réalisation de l'invention.

### Description détaillée de modes de réalisation de l'invention

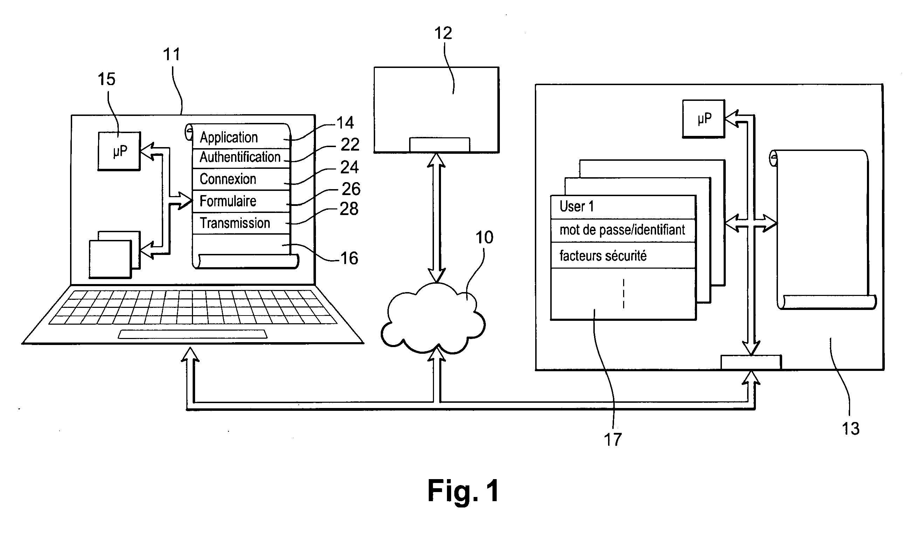

La figure 1 montre un terminal 11 d'un utilisateur en liaison avec un réseau 10 de communication. Dans l'exemple de la figure 1, le terminal 11 mobile est un ordinateur individuel. Le terminal 11 pourrait aussi être un téléphone mobile, un assistant personnel, une tablette, un livre électronique ou tout autre dispositif équivalent ayant une connectivité à un réseau de télécommunication. Le terminal 11 est connecté, via le réseau 10 à d'autres terminaux et / ou serveurs.

Le réseau 10 n'est pas montré en détail. Pour la description, on considère que le réseau 10 comporte tous les éléments nécessaires permettant, par exemple, au terminal 11 de se connecter à un serveur 12 d'applications. Le réseau 10 peut être Internet, un réseau local, un réseau de télécommunication mobile...

Le serveur 12 d'applications peut être notamment un serveur de connexion à Internet, un serveur de télévision, un serveur de localisation géographique du terminal, une banque, un serveur de boutique en ligne, un serveur de télévision cryptée ou d'une façon générale tout serveur d'applications qui nécessite une authentification de l'utilisateur.

La connexion entre le terminal 11 et le serveur 12 d'applications est autorisée après une authentification dudit terminal sur un serveur 13 d'authentification.

Le serveur 13 d'authentification officie en tant que base de données centrale contenant l'ensemble des données relatives à chacun des utilisateurs autorisés à accéder à u n serveur d'applications. Ce serveur 13 d'authentification dédié peut être une base de données du réseau existante, telle qu'un serveur du réseau, auquel on ajoute le procédé d'identification/authentification de l'invention. Il peut être également une nouvelle base de données rajoutée au réseau.

Les données d'identification de l'utilisateur du terminal 11 sont fournies au serveur 13 d'authentification à l'aide d'un programme 14 d'authentification. Le programme 14 d'authentification de l'invention est un logiciel qui peut être réalisé sous forme d'une application à télécharger dans le terminal 11. L'application téléchargée commande l'exécution par un microprocesseur 15 du terminal 11 des codes instructions d'une mémoire 16 dite programme, comprenant généralement un système d'exploitation et des algorithmes d'applications ainsi que le programme 14, tout en assurant la gestion des travaux, les opérations d'entrée-sortie sur les périphériques, l'affectation des ressources aux différents processus, l'accès aux bibliothèques de programmes et aux fichiers, ainsi que la comptabilité des travaux.

Dans la description, on prête des actions à des appareils, tels que serveur ou terminal, ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

La mémoire 16 de programme du terminal 11 est divisée en plusieurs zones, chaque zone correspondant à une fonction ou à un mode de fonctionnement du programme 14 d'authentification.

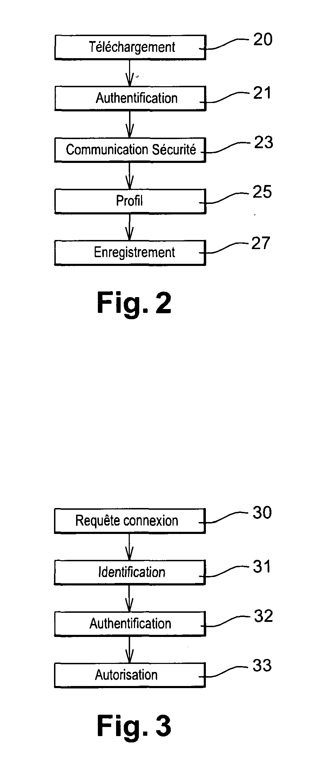

La figure 2 montre une illustration d'étapes correspondant à un enregistrement d'un profil de l'utilisateur dans le serveur 13 d'authentification, selon un mode de réalisation de l'invention. La figure 2 montre une étape 20 préliminaire dans laquelle le logiciel du programme 14 d'authentification est téléchargé dans le terminal 11.

Pour télécharger ledit logiciel sur le terminal 11, le serveur d'applications ou d'authentification met à disposition de l'utilisateur une application correspondant audit logiciel.

Cette mise à disposition peut être un SMS ou un email envoyé au terminal 11 et comportant un lien de téléchargement de l'application depuis une source dudit serveur d'applications ou d'authentification. Ce lien peut être une adresse URL ou un fichier exécutable. Lorsque l'utilisateur active le lien, en le cliquant par exemple, le programme 14 est téléchargé dans la mémoire 16 de programme du terminal 11. L'élaboration et l'envoie de ce SMS ou email peut être effectué en réponse à une requête émanant du terminal 11.

Cette mise à disposition peut être un lien de téléchargement de l'application accessible à partir du site Internet du serveur d'applications ou d'authentification. En cliquant sur ce lien de téléchargement, l'utilisateur peut installer le programme 14 d'authentification sur le terminal 11.

A une étape 21, des codes instructions d'une zone 22 de la mémoire 14 de programme établissent des échanges protocolaires d'authentification de l'utilisateur entre le terminal 11 et le serveur d'authentification, lors de la phase de création d'un profil d'identification de l'utilisateur par le serveur 13 d'authentification. Le profil créé est enregistré comme nouvelle ligne dans une base 17 de données d'identification du serveur d'authentification. Ce profil associe l'utilisateur à un identifiant, un mot de passe attribués et à des données comportementales.

Une conséquence de ces échanges peut être une demande de saisie d'un secret par l'utilisateur du logiciel. Le secret saisi est alors envoyé au serveur d'authentification qui peut le valider ou l'invalider.

Dans un autre mode de réalisation, ces échanges protocolaires d'authentification peuvent être effectués selon les systèmes de type défi/réponse ― mots de passe à usage unique (ou "one-time passwords", ci-après OTPs), dans lesquels les mots de passes sont valides pour une seule transaction et en général durant une durée limitée.

Lorsque le serveur 13 d'authentification reçoit du réseau une requête d'authentification de l'utilisateur émanant du serveur 12 d'applications, il génère un défi (par exemple aléatoire) et le transmet à l'utilisateur sous forme de SMS, d'email ou autres. L'utilisateur saisit le défi sur le terminal 11 qui génère ensuite l'OTP par des algorithmes de hachage et de chiffrement pré-installés. Le terminal 11 transmet l'OTP au serveur 13 d'authentification qui dispose de toutes les informations pour le vérifier, à la suite de quoi l'utilisateur est authentifié.

Dans un autre mode de réalisation, ces échanges protocolaires d'authentification entre le serveur 13 d'authentification et l'utilisateur peuvent être effectués par l'intermédiaire d'un dispositif client inséré dans un lecteur du terminal 11. Ce dispositif client (non représenté) est par exemple un jeton d'authentification (ou "token"), que l'utilisateur transporte avec lui et qui sert à produire des mots de passe à partir desquels ledit serveur peut authentifier l'utilisateur. Un jeton d'authentification peut prendre des formes diverses : carte, calculette, porte-clé, clé USB etc.

Ces échanges protococolaires d'authentification sont également déclenchés entre le terminal 11 et le serveur d'authentification à chaque fois que l'utilisateur voudra accéder à son profil créé.

Pour renforcer la sécurité des données lors de ces échanges protocolaires, l'invention préconise de sécuriser tous les messages et requêtes échangés entre le serveur d'authentification et le terminal 11, lors de la phase de création du profil comportementale spécifiques à l'utilisateur et lors de tous accès ultérieure à ce profil créé.

Pour ce faire, à une étape 23, dès que l'utilisateur est authentifié par le serveur 13 d'authentification, des codes instructions d'une zone 24 de la mémoire 16 de programme établissent avec le serveur 13 d'authentification un canal de communication selon un protocole sécurisé du type SSL, TSL, HTTPS etc....

A une étape 25, suite à l'authentification de l'utilisateur, des codes instructions d'une zone 26 de la mémoire 16 de programme affichent un formulaire de création ou de mise à jour de profil sur l'écran du terminal 11. Ce formulaire comporte des champs à remplir ou à créer correspondant à des données d'identification de l'utilisateur. Sur cette page, l'utilisateur devra renseigner l'identifiant et le mode de passe et les données comportementales. Cet identifiant et ce mot de passe peuvent être fournis par le serveur 12 de services, le serveur 13 d'authentification ou créés par l'utilisateur lui-même.

Les données comportementales correspondent à des facteurs de sécurité relatifs notamment à :
- une plage géographique, par exemple un rayon de X kilomètres autour de la ville de Paris,
- une plage horaire, par exemple entre 11 h et 15h tous les samedis, et/ou
- des filtres comportementaux tels que :
   - un décalage temporel d'une exécution, par l'utilisateur sur le terminal 11, de deux actions prédéfinies successives. Par exemple, le temps de latence de la saisie de deux lettres successifs sur le clavier du terminal 11 par un utilisateur âgé ou malade est une caractéristique quasi spécifique à cet utilisateur,
   - une fréquence d'un comportement,
   - un seuil d'un montant à ne pas dépasser par exemple pour des achats,
   - une caractérisation d'au moins un comportement habituel, occasionnel et/ou divergent.

A une étape 27, des codes instructions d'une zone 28 de la mémoire 16 de programme transmettent le formulaire de saisie au serveur 13 d'authentification via le réseau 10 selon le protocole sécurisé, suite à une validation de l'utilisateur.

Dès que le serveur 13 d'authentification reçoit le formulaire validé, il met à jour le profil de l'utilisateur dans sa base 17 de données en associant l'identifiant de l'utilisateur avec les facteurs de sécurité du formulaire reçu.

Ces facteurs de sécurité, en plus du secret partagé, permettent au serveur d'authentification de réaliser une authentification forte de l'utilisateur. En effet, la combinaison de ces facteurs de sécurité permet d'assurer une réelle solidité de l'authentification de l'utilisateur.

A l'aide du profil de l'utilisateur, le serveur 13 d'authentification effectue l'identification et l'authentification des utilisateurs préalablement à tout accès du terminal 11 sur le serveur 12 d'applications.

La figure 3 montre une illustration d'étapes de fonctionnement du procédé, selon un mode de réalisation de l'invention. La figure 3 montre une première étape préliminaire 30 dans laquelle le serveur 12 d'applications reçoit une requête de connexion émanant du terminal 11. Cette requête peut correspondre à une saisie et validation de l'application correspondante sur l'interface de saisie du terminal 11 ou en cliquant sur un lien URL correspondant.

A une étape 31, le serveur 12 d'applications élabore une requête d'authentification de l'utilisateur à destination du serveur 13 d'authentification. Ladite requête d'authentification comportant l'identifiant de l'utilisateur. Le serveur 13 d'authentification ouvre une session d'identification de l'utilisateur. Cette session d'identification est initiée par l'envoi d'une requête d'identification provenant du serveur 13 d'authentification à destination du terminal 11. Cette requête peut être un formulaire de saisie d'identifiant et/ou de mot de passe destiné à s'afficher sur l'écran du terminal 11.

Ledit formulaire remplie est retourné au serveur 13 d'authentification en conséquence d'une validation par l'utilisateur de cette saisie. Le serveur 13 d'authentification compare les données d'identification contenues dans le formulaire à celles enregistrées dans le profil de l'utilisateur. Si les données d'identification concordent alors l'identification de l'utilisateur est satisfaite un processus d'authentification de l'utilisateur est initié par le serveur 13 d'authentification, à une étape 32.

Le serveur 13 d'authentification engage un dialogue avec l'utilisateur afin de vérifier la concordance des facteurs de sécurité enregistrés dans le profil de l'utilisateur. Ce dialogue est automatiquement interrompu si une vérification d'un des facteurs de sécurité échoue.

Dans un mode de réalisation, les facteurs de sécurité peuvent être vérifiés individuellement. Dans ce cas, le serveur d'authentification envoie de manière successive à destination du terminal 11 des requêtes de vérification des facteurs de sécurité enregistrés.

Si un des facteurs de sécurité est relatif à une plage horaire, le serveur 13 d'authentification vérifie si l'horaire à laquelle il a reçu la requête de connexion se situe dans la plage horaire enregistré dans le profil de l'utilisateur. Si c'est le cas, le serveur 13 d'authentification continue le processus d'authentification

Si un des facteurs de sécurité est relatif à une zone géographique, le serveur d'authentification émet une requête de localisation à destination du terminal. Au regard des applications de géo-localisation de plus en plus communs dans les terminaux, le terminal 11 peut envoyer, de manière complètement transparente à l'utilisateur, sa localisation en réponse à la requête de localisation reçue du réseau 10.

Dans le cas où le terminal ne comporte pas d'applications de géo-localisation, la requête de localisation comporte un champ de saisie d'une zone de localisation affiché sur l'écran de l'utilisateur.

Lorsque la localisation reçue par le serveur 13 d'authentification concorde avec celle enregistrée dans le profil de l'utilisateur, le serveur 13 d'authentification continue le processus d'authentification.

Si un des facteurs de sécurité est relatif à un filtre comportemental, le serveur 13 d'authentification vérifie la concordance de chacun des critères du filtre enregistré dans le profil à l'aide d'un dialogue avec l'utilisateur par l'intermédiaire du terminal 11.

Pour renforcer l'authentification de l'utilisateur, un mode de réalisation préféré est d'utiliser un nombre de facteurs de sécurité supérieur à deux. En effet, plus le nombre de facteurs de sécurité à vérifier est importante plus l'authentification est renforcée.

Dans une variante, les facteurs de sécurité peuvent être vérifiés de manière globalisée. Dans ce cas, une seule requête de vérification est envoyée du serveur 13 d'authentification à destination du terminal 11. Cette requête comporte un ensemble de champs à saisir correspondant chacun à un facteur de sécurité.

Dans un mode de réalisation préféré, le serveur 13 d'authentification sélectionne de manière aléatoire dans le profil de l'utilisateur le nombre et les facteurs de sécurité à vérifier.

L'utilisation de ces différents facteurs de sécurité permet au serveur 13 d'authentification d'authentifier, de manière quasi-sûre, l'identité d'un utilisateur.

Lorsque le processus d'authentification est réussi, le serveur 13 d'authentification élabore, à une étape 32, un résultat d'authentification positif et le transmet au serveur 12 d'applications en réponse à la requête d'authentification. A réception de ce résultat positif, le serveur 12 d'applications élabore une réponse positive à la requête de connexion autorisant le terminal 11 à se connecter audit serveur d'applications.

A réception de cette réponse positive, le terminal 11 peut accéder au serveur 12 d'applications et communiquer avec ce dernier afin de recevoir des flux de données. Un flux est une pluralité de messages selon un protocole réseau. Ces messages sont cohérents du point de vue des données qu'ils comportent. C'est-à-dire, par exemple, qu'ils correspondent tous à une même requête, ou qu'ils correspondent tous à une réponse à une requête.

Lorsque le processus d'authentification est interrompu le serveur 13 d'authentification élabore un résultat d'authentification négatif et le transmet au serveur 12 d'applications en réponse à la requête d'authentification. A réception de ce résultat négatif, le serveur 12 d'applications élabore une réponse négative à la requête de connexion interdisant à l'utilisateur d'accéder à ses ressources. A réception de cette réponse négative l'utilisateur via le terminal 11 peut élaborer et transmettre à destination du serveur 13 d'authentification une requête de modification des facteurs de sécurité de son profil.

Dans une variante, un compteur à rebours est activé avec un délai maximum pour terminer le processus d'identification et d'authentification de l'utilisateur. Si ce processus n'est pas terminé durant ce délai, le serveur d'authentification rompt la connexion. Ceci protège le serveur des éventuels utilisateurs bloqués occupant une connexion indéfiniment. Dans un exemple la valeur par défaut du délai maximum est de 60 secondes.

L'invention permet ainsi la mise en oeuvre d'une méthode d'authentification :
- fiable, c'est-à-dire utilisant des données de sécurité spécifiques au comportement de l'entité à authentifier,
- assurant à un fournisseur de services l'identité de tout accédant à un de ses services quel que soit le réseau et le terminal utilisés pour se connecter à ces services.
- portable sans distinction de terminal, c'est-à-dire pouvant être utilisée sous les différents terminaux existants,
- apte à accroître la confiance des utilisateurs sur la préservation de leur identité du fait que les données permettant de les identifier leur sont spécifiques.

Dans un mode de réalisation, le serveur 14 d'authentification peut être une base de données d'identification et d'authentification pour plusieurs services d'applications. Le profil de l'utilisateur enregistré dans le serveur d'authentification est utilisé comme élément d'authentification de l'utilisateur pour accéder à tous les serveurs d'application. Ce mode de réalisation permet de réduire le nombre de données d'identification que l'utilisateur a à gérer ce qui n'est pas négligeable lorsque le plus souvent ces derniers disposent d'un mot de passe différent pour chaque application à laquelle il accède.

Un exemple d'application de l'invention peut être de protéger les utilisateurs contre les vols de carte bancaire. Dans cet exemple, l'utilisateur crée son profil avec les facteurs de sécurité qui peuvent être par exemple :
- zone géographique : un rayon de 15km autour de paris,
- plage horaire : 11 h à 12h tous les jours de la semaine sauf le weekend,
- une fréquence de retrait d'argent : 3 fois maximum par jour,
- fréquence d'achat : 2 fois maximum par jour,
- montant maximum : 500 euros etc..

Ainsi si la carte bleue de l'utilisateur est usurpée, toutes ces conditions correspondant aux comportements spécifiques de l'utilisateur devront être remplies pour que le serveur d'applications (ici la banque) puisse accepter le retrait, l'achat en ligne, l'achat en magasin ou toute transaction nécessitant la carte bleue. Ainsi, si la personne se situe, en dehors de 15km de paris, par exemple dans un autre pays, la transaction sera automatiquement refusée. Ce type de critère permet de protéger l'utilisateur de manière relativement simple des problèmes liés à la fraude de données bancaire sur Internet.

## Revendications

1. Procédé d'authentification d'un utilisateur dans lequel
- un terminal dudit utilisateur se connecte à un serveur d'applications d'un réseau de télécommunication à l'issue d'une procédure d'authentification dudit terminal,
**caractérisé en ce qu'**il comporte les étapes suivantes :
- association, dans une mémoire de données d'un serveur d'authentification, d'un profil de l'utilisateur à des données d'identification dudit utilisateur qui sont un identifiant, un mot de passe et au moins un facteur de sécurité spécifique à un comportement dudit utilisateur,
- la procédure d'authentification est établie entre le serveur d'authentification et le terminal, lorsque ledit terminal émet une requête de connexion à destination d'un serveur d'applications, la procédure d'authentification étant un échange de vérification des données d'identification dudit utilisateur,
- la connexion entre le terminal et le serveur d'applications est autorisée lorsque l'issue de la procédure d'authentification entre le terminal et le serveur d'authentification est positive.

2. Procédé selon la revendication précédente, dans lequel
- lors de la création et de tout accès ultérieur au profil de l'utilisateur créé, un échange protocolaire d'authentification de l'utilisateur est établi entre le serveur d'authentification et l'utilisateur via le terminal.

3. Procédé selon la revendication précédente, dans lequel un canal de communication sécurisé est établi entre le terminal 11 et le serveur d'authentification lors de l'association du profil de l'utilisateur créé aux données d'identification et de tout accès ultérieur audit profil créé.

4. Procédé selon l'une des revendications précédentes, dans lequel les données d'identification à associer sont fournies par le terminal au serveur d'authentification à l'aide d'un programme d'authentification installée dans ledit terminal.

5. Procédé selon l'une des revendications précédentes, dans lequel le facteur de sécurité est :
- une plage géographique,
- une plage horaire, et/ou
- des filtres comportementaux spécifiques audit utilisateur.

6. Procédé selon la revendication précédente, dans lequel les filtres comportementaux spécifiques audit utilisateur sont :
- un décalage temporel d'une exécution, par l'utilisateur sur le terminal 11, de deux actions prédéfinies successives,
- une fréquence d'un comportement,
- un seuil d'un montant à ne pas dépasser, et/ou
- une caractérisation d'au moins un comportement habituel, occasionnel et/ou divergent.

7. Procédé selon l'une des revendications précédentes, dans lequel
- le serveur d'applications émet une requête d'authentification de l'utilisateur à destination du serveur d'authentification lorsqu'il reçoit une requête de connexion du terminal,
- le serveur d'authentification ouvre une session d'identification et d'authentification de l'utilisateur avec le terminal dans laquelle les données d'identification du profil sont comparées à des réponses fournies par le terminal en réponse à une requête du serveur d'authentification,
- si l'issue de cette session est positive, le serveur d'authentification transmet au serveur d'applications un résultat d'authentification positif.

8. Procédé selon la revendication précédente, dans lequel lors de la session d'identification et d'authentification de l'utilisateur, le serveur d'authentification sélectionne dans le profil le nombre et les facteurs de sécurité à vérifier.

9. Procédé selon l'une des revendications précédentes, dans lequel le serveur d'applications est notamment un serveur de connexion à Internet, un serveur de télévision, un serveur bancaire, un serveur de boutique en ligne, un serveur de localisation géographique du terminal ou un serveur de télévision cryptée.

10. Procédé selon l'une des revendications précédentes, dans lequel le terminal est notamment un téléphone mobile, un ordinateur individuel, un assistant personnel, une tablette ou un livre électronique.

11. Terminal **caractérisé en ce qu'**il comporte des moyens configurés de sorte à établir une connexion avec un serveur d'applications à l'issue d'une procédure d'authentification, selon l'une des revendications précédentes.

12. Serveur d'authentification **caractérisé en ce qu'**il comporte des moyens configurés de sorte à authentifier un utilisateur d'un terminal à l'aide d'un profil de l'utilisateur associé, dans une mémoire de données dudit serveur d'authentification, à des données d'identification dudit utilisateur qui sont un identifiant, un mot de passe et au moins un facteur de sécurité spécifique à un comportement dudit utilisateur, selon l'une des revendications précédentes.
